# EUROPÄISCHE PATENTSCHRIFT

(11) **EP 0 262 331 B1**
(45) Veröffentlichungstag und Bekanntmachung des Hinweises auf die Patenterteilung: **24.02.1993**
(21) Anmeldenummer: 87111073.0
(22) Anmeldetag: 30.07.1987
(51) Int. Cl.: H04M 3/44, H04Q 3/545

(54) **Verfahren zur Bewertung von Eingabeinformationen für eine rechnergesteuerte Fernsprechvermittlungsanlage, insbesondere Fernsprechnebenstellenanlage mit alphanumerisch aufgeteilten Eingabeorganen in den jeweiligen Endeinrichtungen**
Method of discrimination of input data for a processor-controlled telephone exchange, especially a private telephone exchange with alpha-numerically split input organs in the topical terminals
Procédé de discrimination de données d'entrée pour un central téléphonique commandé par calculateur, en particulier central téléphonique privé avec des organes d'entrée distribués de façon alphanumérique dans les terminaux actuels

(30) Priorität: 29.08.1986 DE 3629400
(43) Veröffentlichungstag der Anmeldung: 06.04.1988
(73) Patentinhaber: SIEMENS AKTIENGESELLSCHAFT, 80333 München (DE)
(72) Erfinder: Fey, Dieter, Dipl.-Ing., D-8000 München 71 (DE)

(56) Entgegenhaltungen:
- EP-A- 0 166 318
- EP-A- 0 178 403
- DE-A- 3 236 500
- PATENT ABSTRACTS OF JAPAN, Band 9, Nr. 263 (E-351)[1986], 19. Oktober 1985 & JP-A-60 109 362
- IBM TECHNICAL DISCLOSURE BULLETIN, Band 25, Nr. 11A, April 1983, Seite 5787; A. DURAND: "Automatic PABX call-by-name directory"

## Beschreibung

Die Erfindung betrifft ein Verfahren für eine rechnergesteuerte Fernsprechvermittlungsanlage, insbesondere Fernsprechnebenstellenanlage, der über daran angeschlossene vorzugsweise digitale Endeinrichtungen Eingabeinformationen übermittelbar sind, die als Wahlinformationen bzw. als Anforderungsinformationen für jeweils ein Leistungsmerkmal dienen und entweder ausschließlich aus Informationen jeweils einer von zwei unterschiedlichen Informationsarten oder aus einer Mischung von Informationen dieser zwei Informationsarten bestehen, wobei zur Abwicklung von Funktionsabläufen die zentrale Rechnersteuerung Zugriff zu in ihrem Speicherinhalt veränderlichen bzw. unveränderlichen Speichereinheiten hat.

Bei Endeinrichtungen, die zur Informationseingabe ein in numerische Zeichen aufgeteiltes Aufgabeorgan aufweisen, kann in der Vermittlungseinrichtung für bestimmte Anschlußlagen ein Kurzrufnummernspeicher vorgesehen sein. Damit kann ein Teilnehmer, dem dieses Leistungsmerkmal zugeordnet wurde, eine Gesprächsverbindung anstelle der Einwahl der vorgesehenen und ggf. eine große Stellenzahl aufweisenden Rufnummer durch die Einwahl einer dem gewünschten Teilnehmer zugeordneten Kurzrufnummer herstellen. Um insbesondere den Speicheraufwand zu reduzieren, kann anstelle eines individuellen Kurzrufnummerngebers ein solcher Rufnummerngeber gemeinsam für eine bestimmte Benutzergruppe oder als zentrale Einheit vorgesehen werden. Um den Bedienungskomfort zu erhöhen, sind als Erweiterung einer Endeinrichtung zusätzliche Namentastengeber bekannt, bei denen durch die Betätigung einer von mehreren hierfür vorgesehenen Tasten unmittelbar eine Verbindung zu einem vorbestimmten Teilnehmer aufgebaut werden kann. Die hierfür notwendige Speicherung der jeweils zugehörigen Rufnummern erfolgt nicht im zentralen Systemteil, sondern in der Endeinrichtung. Da zeitgemäße Nebenstellenanlagen den Teilnehmern eine große Anzahl von Leistungsmerkmalen ermöglichen, sind üblicherweise zu ihrer Aktivierung als Ergänzung der über numerische Zeichen erfolgenden Wahlinformationseingabe weitere Sondertasten vorgesehen. Die Nutzung der möglichen Leistungsmerkmale erfordert in der Regel eine große Anzahl derartiger Sondertasten und der unterschiedliche Leistungsmerkmalsumfang bedingt eine Vielfalt von Endeinrichtungen.

Durch die europäische Patentanmeldung EP-A-0 166 318 ist es bekannt, Wahlinformationen und Steuerinformationen für Leistungsmerkmale einer Fernsprechvermittlungsanlage nicht nur durch die Wahl von Ziffernfolgen über ein Nummerntastenfeld einer Fernsprechendstelle einzugeben, sondern der Teilnehmer hat auch die Möglichkeit, eine Spracheingabe über ein Mikrofon eines Handapparates der Fernsprechendstelle vorzunehmen. Durch das Einsprechen von Wörtern und/oder Ziffern kann der Teilnehmer sein Wahlziel eingeben oder angebotene Leistungsmerkmale, insbesondere einer Nebenstellenanlage aktivieren. Es ist auch die kombinierte Eingabe durch Sprache und über das Nummerntastenfeld möglich. Die Auswertung dieser durch unterschiedliche Informationsarten einzugebenden Informationen erfolgt dann über die entsprechenden Auswerteeinheiten, in diesem speziellen Fall durch eine Spracherkennungseinrichtung und durch eine Mehrfrequenzcode-Wahlempfängereinheit für die eingetasteten Ziffern.

Es sind auch Eingabetastaturen bekannt, die für eine Eingabe mit sogenannten Alpha-Zeichen versehen sind. Aufgrund einer solchen Tastatur können beispielsweise in einem einer Endeinrichtung zugehörenden Gerät nach Art eines elektronischen Notizbuches Informationen zur Speicherung eingegeben werden. Diese können dann bei Bedarf z. B. über eine entsprechende Anzeige unmittelbar zur Verfügung gestellt werden. Die Speicherung der betreffenden Informationen erfolgt also dezentral in dem jeweiligen Gerät.

Es ist die Aufgabe der Erfindung, in den Fällen, in denen für eine Informationseingabe Informationen unterschiedlicher Informationsarten verwendbar sind, den für ihre Auswertung notwendigen Aufwand gering zu halten und den eingegebenen Auftrag durch eine möglichst geringe Zahl von Verarbeitungsschritten zu erfüllen.

Dies wird dadurch erreicht, daß für ein Verfahren der eingangs genannten Art die zwei unterschiedlichen Informationsarten durch Alpha-Zeichen und durch numerische Zeichen realisiert sind, die vermittels einer alphanumerisch aufgeteilten Tastur eines Eingabeorgans als Eingabeinformation in geringer Stellenzahl erzeugt werden, daß in einer durch die Eingabeinformation adressierbaren und unmittelbar der zentralen Rechnersteuerung zugeordneten zentral vorgesehenen Tabelle ein teilnehmerbezogener und ein leistungsmerkmalbezogener Tabellenbereich vorhanden ist, in dem jeweils die einer jeden erlaubten Eingabeinformation zugeordneten vermittlungs- und/oder steuerungstechnischen Vorgänge abgespeichert sind und daß entweder durch die Art des Anfangszeichens einer eingegebenen Information oder durch eine Blockbewertung die Auswahl des jeweils maßgebenden Tabellenbereiches erfolgt und die Durchführung dieser Vorgänge nach der entsprechenden Abfrage des Inhalts des maßgebenden Speicherplatzes durch die zentrale Rechnersteuerung veranlaßt wird.

Es kann also eine Kommunikationsverbindung durch die Eingabe von Wahl- bzw. Anforderungsinformationen erfolgen, die durch eine entsprechend vorgegebene Verkürzung eine geringe Anzahl von Zeichen erfordern und von einprägsamer Art sein können. So könnte beispielsweise als Wahlinformation die aus dem Namen eines gewünschten Fernsprechteilnehmers abgeleitete Kurzform aus Alpha-Zeichenelementen dienen. Durch die vorgesehenen verkürzten Eingabeinformationen wird auch eine größere Benutzerakzeptanz erreicht. Es wird eine zentrale, alphanumerische Eingabeinformationsbewertung der im gesamten Zeichenvorrat enthaltenen Zeichen, d. h. der numerischen Zeichen und der Alphazeichen, vorgenommen. Die große Anzahl der aus diesem Zeichenvorrat zu bildenden Kurzinformationen machen zusätzliche Tasten, die z.B. üblicherweise zur Anforderung von Leistungsmerkmalen dienen könnten, grundsätzlich entbehrlich. Bei digitalen Endeinrichtungen werden die den einzelnen Zeichenelementen zugehörigen Tasteninformationen beispielsweise in ASCII-Format übermittelt. Damit können sowohl die numerischen als auch die Alpha-Zeichen erfaßt werden, so daß keine Änderung des Übertragungsprinzips notwendig wird. Die aufgrund der Eingabe eines Namens- bzw. Anforderungskurzworts erforderlichen wenigen Verarbeitungsschritte führen dazu, daß die dynamische Belastung des Vermittlungssystems vermindert wird. Die einzelnen Auftragswünsche werden nämlich schnellstmöglich in den jeweiligen Zielzustand übergeführt. Um dies zu erreichen, ist lediglich eine zentrale Tabelle zu führen, wobei durch eine einfache Bewertung der eingegebenen Informationen der jeweils zuzuordnende Tabellenbereich bestimmbar ist .

Gemäß einer Weiterbildung des erfindungsgemäßen Verfahrens ist bei einem Einsatz von Endeinrichtungen mit alphanumerischen Eingabeorganen in Systemen, in denen zunächst Endeinrichtungen mit ausschließlich numerischen Eingabeorganen angeschlossen waren, die alphanumerische Bewertungstabelle zusätzlich zu der bisherigen für die numerische Wahlbewertung herangezogenen Tabelle abgespeichert.

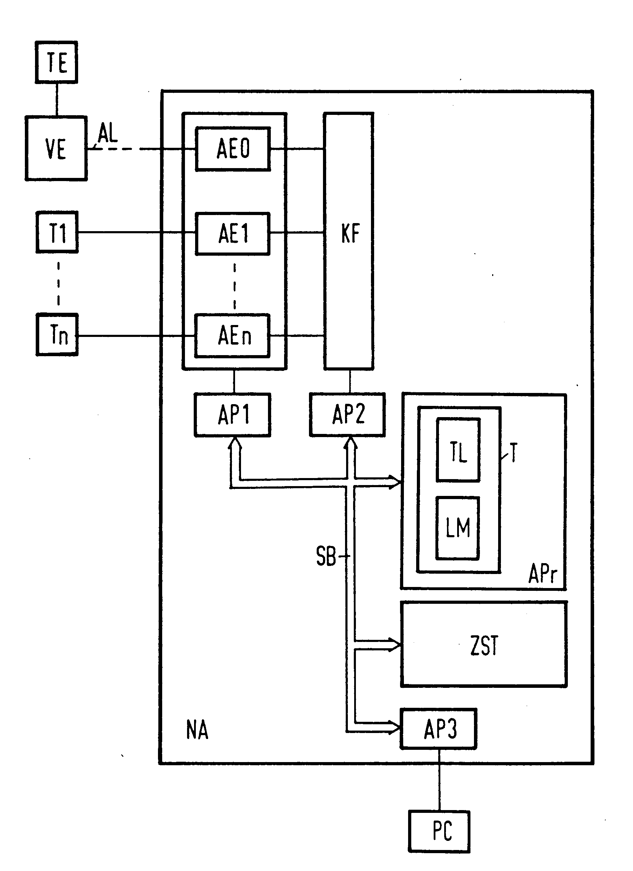

Im folgenden wird ein Ausführungsbeispiel der Erfindung anhand der Zeichnung näher erläutert. Die Zeichnung zeigt die hierfür notwendigen Systemkomponenten eines digitalen Vermittlungssystems, das z. B. ein Fernsprechnebenstellensystem darstellt. Eine zentrale Rechnersteuerung ZST steuert im wesentlichen die für die einzelnen Betriebsmöglichkeiten der Anlage erforderlichen Abläufe. Dabei greift sie auf den Inhalt eines ihr zugeordneten Arbeits- und Programmspeichers APr zurück. Die zentrale Rechnersteuerung ZST ist über den Systembus SB mit der Speichereinheit APr und Schnittstellenanpassungseinrichtungen AP verbunden. Über eine mit dem Koppelfeld KF verbundene Anpassungseinrichtung AP2 erfolgen die zeitgerechten Einstellungen bzw. Steuerungen des Koppelfeldes KF. Das digitale Koppelfeld KF ist funktionsmäßig ein rechnergesteuerter Speicherbereich, in dem die digitalen Sprachsignale eingespeichert und zum jeweiligen Verbindungspartner ausgelesen werden. Über ein Amtsleitungsbündel bzw. über eine Amtsleitung AL ist das Nebenstellenvermittlungssystem NA mit einer externen Anlage, beispielsweise mit einer Vermittlungsanlage VE des öffentlichen Netzes verbunden. Stellvertretend für die daran angeschlossenen Endgeräte ist die Teilnehmerendeinrichtung TE dargestellt. Der weiterführenden Leitung ist eine Anschlußeinheit AEO zugeordnet, die mit dem Koppelfeld KF verbunden ist. Die Teilnehmerendeinrichtungen T1...Tn des Nebenstellenvermittlungssystems sind über die Anschlußeinheiten AE1...AEn gleichfalls mit dem digitalen Koppelfeld KF verbunden. In dieser Anschlußeinheit findet in Abhängigkeit von der Art der jeweiligen Endeinrichtung eine Anpassung der physikalischen Eigenschaften der Teilnehmerschnittstellen an die Schnittstellen des Koppelfeldes KF statt. Gleichzeitig erfolgt eine Bearbeitung der mit den Endeinrichtungen abzuwickelnden Signalisierungen. Es kann beispielsweise eine Vorverarbeitung der von den vorhandenen Indikationsstellen gelieferten Informationen durchgeführt werden. Die Schnittstelle zwischen den Anschlußeinheiten und dem Koppelfeld KF ist mehradrig, wobei sie im digitalen System für digitale Sprachsignale und für Steuersignale durchgängig ist. Die Anschlußeinheiten AE sind über eine Schnittstellenanpassung AP1 mit dem Systembus SB verbunden, um mit Hilfe der zentralen Steuereinrichtung ZST eine vollständige Signalisierungsbearbeitung durchführen zu können. Eine weitere Schnittstellenanpassung AP3 übernimmt die prozedurale und zeitgerechte Anpassung von Informationen, die sich aus dem Anschluß eines Bedien- bzw. Wartungsterminals, beispielsweise in Form eines Personal Computers PC, ergeben.

Ein Teil der Endeinrichtungen T1...Tn können mit numerischen Eingabeorganen ausgerüstet sein, während die übrigen sogenannte alphanumerische Eingabeorgane aufweisen sollen.

Im Regelfall werden diese alphanumerischen Eingabeorgane in entsprechend aufgeteilten Tastaturen bestehen. Sie werden also beispielsweise mit einer die numerischen Zeichenelemente 0...9 einschließlich der bekannten Sondertasten Stern und Raute aufweisenden Tastatur und einer zusätzlichen Tastatur, deren Zeichenelemente mindestens z. B. den Buchstaben des Alphabetes A...Z entsprechen, ausgerüstet sein. Mit Hilfe einer solchen alphanumerischen Tastatur an der Endeinrichtung werden neben Wahlinformationen auch Informationen über die Anforderung einzelner Leistungsmerkmale von Teilnehmer an das Vermittlungssystem gegeben. Hierfür sind Kombinationen aus dem gesamten Zeichenvorrat vorgesehen, die für die genannte Informationseingabe einprägsam sind und nur eine geringe Gesamtstellenzahl von beispielsweise maximal drei Zeichenelementen aufweisen. Diese einzelnen Kombinationen können aus Zeichen ein und derselben Zeichenart, d. h. also aus rein numerischen bzw. aus reinen Alpha-Zeichenelementen oder aus Zeichenelementen der beiden unterschiedlichen Zeichenarten bestehen. Als Rufinformation für die einzelnen Teilnehmer werden grundsätzlich Buchstabenkombinationen verwendet, die aus einer Verkürzung des Namens des betreffenden Teilnehmers gebildet werden. Es sind aber auch Rufinformationen denkbar, die aus einer sinnfälligen Buchstaben-Zahlen-Kombination bestehen. Die für die Anforderung von Leistungsmerkmalen einzugebenden Informationen können in Form von Buchstabenkombinationen erfolgen, die das jeweilige Leistungsmerkmal in einprägsamer Weise darstellen. So könnte beispielsweise für das Leistungsmerkmal Rückruf die Buchstabenkombination RR, für das Leistungsmerkmal Wahlwiederholung die Buchstabenkombination WW, für das Leistungsmerkmal Anrufumleitung die Buchstabenkombination AU gewählt werden. Für die übrigen in der Anlage vorgesehenen Leistungsmerkmale könnten Buchstabenkürzel bestimmt werden, die in gleicher Weise an die jeweilige Wortbedeutung angelehnt sind. Es ist lediglich darauf zu achten, daß jeweils eine eindeutige Kurzbezeichnung zur Informationseingabe festgelegt wird.

Unabhängig von der Art der eingegebenen Information wird nun sowohl für rein numerische, für aus Alpha-Zeichnelementen und für die aus Zeichenelementen der beiden Zeichenarten bestehenden alphanumerischen Information eine Bewertung bezüglich des jeweiligen Informationsinhaltes an zentraler Stelle vorgenommen. Die hierfür notwendige Bewertungstabelle ist in der Speichereinrichtung APr, die den Arbeitsspeicher und die Programmspeicher symbolisiert, enthalten. Da über die alphanumerisch aufgeteilte Tastatur sowohl Wahlinformationen als auch Informationen zur Anforderung jeweils eines bestimmten Leistungsmerkmals eingegeben werden können, wird eine Aufteilung der Bewertungstabellen in eine teilnehmerbezogene Tabelle TL und eine leistungsmerkmalbezogene Tabelle LM vorgenommen. Bei der Implementierung der Wahlbewertung für die aus den Zeichen ein und derselben Zeichenart oder aus Zeichen der unterschiedlichen Zeichenarten gebildeten Informationen in den zentralen Speicherbereich kann bezüglich der Bewertung der Wahlinformationen eine weitere Unterteilung vorgenommen werden. Eine solche Unterteilung kann beispielsweise dann gegeben sein, wenn für eine bestehende Anlage nachträglich die Anschaltung von Endeinrichtungen mit alphanumerisch aufgeteilten Tastaturen neben den Endeinrichtungen mit rein numerisch aufgeteilten Eingabeorganen vorgesehen wird. Zu der vorhandenen rein numerischen Bewertungstabelle kann dann in den Speicher zusätzlich eine Tabelle für die Bewertung derjenigen Informationen vorhanden sein, die von Endeinrichtungen mit alphanumerisch aufgeteilten Eingabeorganen abgegeben werden. Derartige Eingaben sollen beispielsweise maximal dreistellig sein.

Aus der abgespeicherten teilnehmerbezogenen Tabelle wird dann in einem bestimmten Adressierungsverfahren von der zentralen Steuereinrichtung ZST die in einem bestimmten Tabellenplatz für die betreffende Eingabekombination enthaltene Anschlußlage ausgelesen und durch eine entsprechende Steuerung des Koppelfeldes KF die Verbindung zu der gewünschten Endeinrichtung aufgebaut. Die Auswahl der einzelnen Wahlkombinationen ist im System frei generierbar. Um eine Eingabe mit geringer Zeichenzahl zu ermöglichen, wird also nicht auf die hierfür sonst üblichen Rufnummerngeber zurückgegriffen, sondern das Wahlbewertungsprogramm der zentralen Einrichtung ermittelt die in der Tabelle abgespeicherte Anschlußlage bzw. die Ausführungsadresse für ein Leistungsmerkmal, die in der Tabelle LM enthalten sind. Die Auswahl der anzusteuernden Tabelle kann entweder nach dem ersten eingegebenen Wähl- bzw. Anforderungszeichen oder nach der Aufnahme des gesamten Zeichenblocks erfolgen. Es kann beispielsweise festgelegt werden, daß bei jeder Anforderung eines Leistungsmerkmals für das erste Zeichen die in der Zifferntastatur enthaltene Sterntaste betätigt wird. Danach erfolgt dann die Kennzeichnung des Leistungsmerkmals mit mindestens einem Alpha-Zeichen. Mit dem ersten Sonderzeichen ist die Tabelle mit den Ausführungsadressen der Leistungsmerkmale bestimmt. Legt man fest, daß eine Wahlinformation mit einem Alpha-Zeichen beginnt, so liegt damit nach der Auswertung des ersten Zeichens fest, daß die den alphanumerischen Eingabekombinationen zugeordnete Tabelle der Anschlußlagen abzufragen ist. Besteht diese Einschränkung hinsichtlich der Art des ersten Wählzeichens nicht, so kann zunächst der ganze ausgesendete Zeichenblock aufgenommen werden, um zunächst die Art der einzelnen Wählzeichen zu bestimmen. Beinhaltet die Information ein Alpha-Zeichen, so kann mit der vorgegebenen Basisadresse die für alphanumerische Eingaben zuständige Tabelle angesteuert werden.

## Patentansprüche

1. Verfahren für eine rechnergesteuerte Fernsprechvermittlungsanlage, insbesondere Fernsprechnebenstellenanlage (NA), der über daran angeschlossene vorzugsweise digitale Endeinrichtungen (T1 bis Tn) Eingabeinformationen übermittelbar sind, die als Wahlinformationen bzw. als Anforderungsinformationen für jeweils ein Leistungsmerkmal dienen und entweder ausschließlich aus Informationen jeweils einer von zwei unterschiedlichen Informationsarten oder aus einer Mischung von Informationen dieser zwei Informationsarten bestehen, wobei zur Abwicklung von Funktionsabläufen die zentrale Rechnersteuerung (ZST) Zugriff zu in ihrem Speicherinhalt veränderlichen bzw. unveränderlichen Speichereinheiten (APr) hat,
**dadurch gekennzeichnet**,
daß die zwei unterschiedlichen Informationsarten durch Alpha-Zeichen und durch numerische Zeichen realisiert sind, die vermittels einer alphanumerisch aufgeteilten Tastatur eines Eingabeorgans als Eingabeinformation mit geringer Stellenzahl erzeugt werden, daß in einer durch die Eingabeinformation adressierbaren und unmittelbar der zentralen Rechnersteuerung (ZST) zugeordneten zentral vorgesehenen Tabelle (T) ein teilnehmerbezogener (TL) und ein leistungsmerkmalbezogener (LM) Tabellenbereich vorhanden ist, in dem jeweils die einer jeden erlaubten Eingabeinformation zugeordneten vermittlungs- und/oder steuerungstechnischen Vorgänge abgespeichert sind, daß entweder durch die Art des Anfangszeichens einer eingegebenen Information oder durch eine Blockbewertung die Auswahl des jeweils maßgebenden Tabellenbereiches (TL, LM) erfolgt und die Durchführung dieser Vorgänge nach der entsprechenden Abfrage des Inhalts des maßgebenden Speicherplatzes durch die zentrale Rechnersteuerung (ZST) veranlaßt wird.

2. Verfahren nach Anspruch 1,
**dadurch gekennzeichnet**,
daß bei einem Einsatz von Endeinrichtungen mit alphanumerischen Eingabeorganen in Systemen, in denen zunächst Endeinrichtungen mit ausschließlich numerischen Eingabeorganen angeschlossen waren, die alphanumerische Bewertungstabelle zusätzlich zu der bisherigen für die numerische Wahlbewertung herangezogenen Tabelle abgespeichert wird.

## Claims

1. Method for a computer-controlled telephone exchange, preferably telephone private branch exchange (NA), to which input information can be transmitted via preferably digital terminals (T1 to Tn) connected thereto, which information serves as dialling information or as request information for in each case one feature and comprises either solely information of in each case one of two different information types or a mixture of information of said two information types, the central computer control unit (ZST) having access, for the execution of functions, to memory units (APr) whose memory contents are variable or invariable, characterised in that the two different information types can be realised by alpha characters and by numeric characters which are generated as input information with a small number of positions by means of an alphanumerically split keyboard of an input unit, in that a subscriber-related (TL) and a feature-related (LM) table area is present in a centrally provided table (T) which can be addressed by the input information and is directly assigned to the central computer control unit (ZST), in which table area in each case the switching and/or control processes assigned to each permitted input information item are stored, in that the relevant table area (TL, LM) in each case is selected either by the type of the initial character of an input information item or by a block evaluation, and the execution of said processes is triggered by the central computer control unit (ZST) after the corresponding interrogation of the contents of the relevant memory location.

2. Method according to Claim 1, characterised in that when terminals with alphanumeric input units are used in systems in which terminals with only numeric input units were initially connected, the alphanumeric evaluation table is stored in addition to the previous one used for the numeric dialling evaluation.

## Revendications

1. Procédé pour une installation de commutation téléphonique pilotée par ordinateur, notamment une installation à postes téléphoniques supplémentaires (NA), à laquelle peuvent être retransmises, par l'intermédiaire de terminaux de préférence numériques (T1 à Tn), raccordés à cette installation, des informations d'entrée qui sont utilisées respectivement comme informations de sélection ou comme informations de demandes pour une caractéristique de puissance et sont constituées soit exclusivement d'informations faisant respectivement partie de l'un de deux types différents d'informations, soit par le mélange d'informations de ces deux types d'informations, l'unité de commande centrale de l'ordinateur (ZST) ayant accès, pour l'exécution de cycles de fonctionnement, à des unités de mémoire (APr) dont le contenu est modifiable ou non modifiable,
caractérisé par le fait
que les deux types d'informations différents sont formés par des caractères alphanumériques et par des caractères numériques, qui sont produits au moyen d'un clavier à répartition alphanumérique d'un organe d'entrée, en tant qu'information d'entrée, possédant un faible nombre de chiffres, que dans un tableau (T) prévu de façon centrale, adressable par l'information d'entrée et associé directement à l'unité centrale de commande de l'ordinateur (ZST), sont prévues une zone de tableau (TL) rapportée aux abonnés et une zone (LM) rapportée aux caractéristiques de puissance et dans laquelle sont respectivement mémorisés les processus techniques de commutation et/ou de commande associés à chacune des informations d'entrée autorisées, que la sélection de la zone de tableau respectivement déterminante (TL, LM) s'effectue soit par le type du caractère initial d'une information introduite soit par une évaluation de blocs et que l'exécution de ces processus est déclenchée, après une interrogation correspondante du contenu de l'emplacement de mémoire déterminant, par l'unité de commande centrale à ordinateur (ZST).

2. Procédé suivant la revendication 1, caractérisé par le fait
que dans le cas de l'utilisation de terminaux à organes d'entrée alphanumériques dans des systèmes, dans lesquels étaient tout d'abord raccordés des terminaux possédant des organes d'entrée exclusivement numériques, le tableau alphanumérique d'évaluation est mémorisé, en plus du tableau antérieurement connu et utilisé pour l'évaluation numérique de sélection.
